# EUROPÄISCHE PATENTSCHRIFT

(11) **EP 1 156 718 B1**
(45) Veröffentlichungstag und Bekanntmachung des Hinweises auf die Patenterteilung: **28.05.2003**
(21) Anmeldenummer: 00910748.3
(22) Anmeldetag: 01.03.2000
(51) Int. Cl.: A21B 1/48, A21B 5/02, A21C 15/00

(54) **VERFAHREN UND VORRICHTUNG ZUM BACKEN VON TEIGBÄNDERN**
METHOD AND DEVICE FOR BAKING STRIPS OF DOUGH
PROCEDE ET DISPOSITIF DE CUISSON DE BANDES DE PATE

(30) Priorität: 01.03.1999 DE 19908860
(43) Veröffentlichungstag der Anmeldung: 28.11.2001
(73) Patentinhaber: Hebenstreit-Rapido GmbH, 01445 Radebeul (DE)
(72) Erfinder: STEINER, Uwe, D-01445 Radebeul (DE); LIPPERT, Claus, D-01159 Dresden (DE)
(74) Vertreter: Grünecker, Kinkeldey, Stockmair & Schwanhäusser Anwaltssozietät
(86) Internationale Anmeldenummer: EP0001767
(87) Internationale Veröffentlichungsnummer: WO00051437

(56) Entgegenhaltungen:
- EP-A- 0 528 593
- WO-A-95/32630
- DE-A- 2 448 902
- US-A- 3 993 788

## Beschreibung

Die Erfindung betrifft ein Verfahren und eine Vorrichtung zum Backen von Teigbändern, insbesondere zur Herstellung von Waffeln, wie z.B. Waffelröllchen, aus einem zuckerhaltigen Teig.

Verfahren und Einrichtungen, die Waffelteige kontinuierlich zu Waffelbändern bakken bzw. trocknen, sind z.B. aus der WO 97/34492 oder der WO 98/25474 bekannt. Hierbei wird Waffelbackteig in flüssiger Form auf einen endlosen Backträger in einer Spur oder mehrspurig, insbesondere eine auf einem Trommelmantel ausgebildeten endlosen Backfläche aufgetragen, als endlose Bänder gebacken und zu einer nachgeschalteten, weiterverarbeitenden Station gefördert. Der relativ hohe Anteil an Zucker, Fruchtzucker und ähnlichen Komponenten in der Backmasse hält das gebackene Waffelband bis zu seiner Abkühlung geschmeidig und ermöglicht somit eine weitgehend beliebige Formgebung, z.B. durch Biegen oder Prägen unmittelbar im Anschluß an den Backvorgang.

Die Rezeptur des Teiges und Temperatur beim Backen bedingen eine entsprechende Verweildauer des Teiges auf dem Backträger. Die Menge des pro Zeiteinheit zu backenden Teiges ist direkt abhängig von der Geschwindigkeit des Backträgers und seiner Länge. Für wirtschaftliche Backmengen müssen daher die Backträger eine entsprechende Länge aufweisen. Somit sind große Backtrommeldurchmesser oder langgestreckte Backbänder erforderlich, wie dies auch aus der EP 760 603 hervorgeht.

Solche Einrichtungen haben daher in nachteiliger Weise einen großen Platzbedarf und bedingen eine masseintensive Konstruktion. Da neben dem (bereits selbst verhältnismäßig massereichen) Backträger und dem aufgetragenen Teig zwangsweise auch die benachbarten, massiven Konstruktionsteile mitbeheizt werden, ist der erforderliche Wärmeenergieeintrag hoch, überdies weisen die bekannten Einrichtungen massebedingt eine hohe thermische Trägheit auf.

Aus energetischen Gründen ist es daher erforderlich, daß die gesamten Einrichtungen in Gehäusen von der Umgebung verhältnismäßig vollständig abgeschlossen werden. Dies führt wegen der großen Abmessungen zu entsprechendem gehäusetechnischen Aufwand.

Überdies neigen zuckerhaltige Teige auf Metallflächen zu einer starken Anhaftung an der Oberfläche des Backträgers. Deshalb weisen die bekannten Einrichtungen vielfach Abstreifer auf, die den gebackenen Teig vom Backträger lösen und die beständig gegen die Oberfläche des Backträgers arbeiten. Hierdurch ist ein ständiger Verschleiß, insbesondere der Abstreifer aber auch des Backträgers bedingt.

Schließlich ist wegen des hohen Zuckeranteiles und der anhaftungsbedingt starken Verschmutzung der Backträger eine periodische Reinigung desselben erforderlich, mit der Folge einer Unterbrechung des Backvorganges. Zusätzlich angeordnet Reinigungsstationen zum Sauberbürsten des Backträgers bedingen nicht nur einen erheblichen Zeitaufwand für die Reinigung, sondern auch die Gefahr, daß die glatte Oberfläche des Backträgers weiter beschädigt und aufgerauht wird. Derartige Backträger müssen daher in gewissen Abständen mit hohen Kosten abgeschliffen werden.

Der Erfindung liegt daher die Aufgabe zugrunde, ein Verfahren und eine Vorrichtung zu schaffen, die das kontinuierliche Backen und Trocknen eines Teigbandes oder mehrerer Teigbänder, insbesondere zur Herstellung von Waffeln, wie z.B. Waffelröllchen, aus einem zuckerhaltigen Teig gestattet und die nur einen verhältnismäßig geringen apparatetechnischen Aufwand erfordern, einfache Anforderungen an den Backträger stellen und eine wesentlich günstigere Energiebilanz gestatten.

Diese Aufgabe wird bei einem Verfahren der eingangs genannten Art erfindungsgemäß dadurch gelöst, daß der zuckerhaltige Teig auf ein flexibles und unter mehrfacher Richtungsänderung durch einen beheizten Backraum geführtes Trägerband aufgegeben, in der Atmosphäre des Backraumes gebacken und an einer Austrittsseite von diesem abgenommen wird.

Vorzugsweise wird der Teig auf ein dünnes, endloses, hochflexibles, wärmebeständiges, lebensmitteltaugliches und antiadhäsives Band, insbesondere ein Kunststoffmaterialband oder ein kunststoffbeschichtetes Band, in einer Spur oder mehrspurig nebeneinander aufgegeben. Bevorzugte Bandwerkstoffe sind Teflon oder ein mit einer Silikongummischicht oder mit Teflon beschichtetes Glasfasergewebeband.

Das Trägerband soll schnell auswechselbar sein und ist daher vorzugsweise als Endlosband über fliegend gelagerte Bandrollen im Backraum mehrfach umgelenkt und (auch unter Richtungsänderung) in seiner Längsachse, vorzugsweise im wesentlichen vertikal oder horizontal geführt.

Auf diese Weise ist es möglich, die erforderliche Länge des Backträgers (Trägerbandes) auf begrenztem Raum anzuordnen.

Weitere, bevorzugte Ausgestaltungen des erfindungsgemäßen Verfahrens sind in den übrigen Unteransprüchen dargelegt.

Hinsichtlich der Vorrichtung der eingangs genannten Art wird die vorgenannte Aufgabe erfindungsgemäß gelöst durch die Anordnung eines flexiblen, unter Mehrfachumlenkung durch einen beheizten Backraum geführten Trägerbandes.

Die Beheizung des Backraumes erfolgt vorzugsweise von mehreren Seiten durch Wärmestrahler (z.B. elektrische oder gasbeheizte Infrarotstrahler oder Keramikstrahler).

Der Backraum wird zwischen den Wärmestrahlern vorzugsweise durch Reflexionswände abgeschirmt, gegebenenfalls unter Einschluß der nach außen weisenden Rückseite der Wärmestrahler. Äußere, vorzugsweise in Mehrfach-Parallelanordnung ausgeführte Prallwände, die sich im wesentlichen parallel zu den Reflexionswänden aber weiter außen liegend erstrecken, gestatten es nicht nur, in dem Raum zwischen Reflexionswänden und Prallwänden eine Luft-Zwangszirkulation zur Kühlung bzw. Vergleichmäßigung des Temperaturfeldes zu bewirken, so daß auf den Einsatz spezieller Wärmedämmstoffe verzichtet werden kann. Die Luftkühlung der Prallwände sorgt im übrigen für eine Minimierung möglicher Wärmeabstrahlung nach außen und trägt zu besonders günstigen Energiebilanz des erfindungsgemäßen Verfahrens und der Backvorrichtung bei.

Eine vorzugsweise diagonal-opponierende Anordnung der Infrarotstrahler führt in Verbindung mit den Wärme-Reflexionswänden zwischen den Wärmestrahlern, die den Backraum umschließen, zu einer besonderen Homogenisierung des Temperaturfeldes im Backraum.

Vorzugsweise kann die Heizleistung der Wärmestrahler in Abhängigkeit von der Position innerhalb der Backeinrichtung variieren, um den Temperaturverlauf dem Backprozeß anzupassen.

Die Beheizung des Backraumes erfolgt vorzugsweise über die beheizten Innenwände des Gehäuses, vorzugsweise in Verbindung mit Wärmeleitblechen, die die Abstrahlungsfläche der Innenwände weiter vergrößern und lokal auch die Erwärmung des Trägerbandes von dessen Rückseite gleichmäßig ermöglichen.

Weitere, bevorzugte Ausgestaltungen der erfindungsgemäßen Vorrichtung sind in den übrigen Unteransprüchen dargelegt.

Der konstruktive Aufwand für Gestell, Antrieb und Gehäuse der Vorrichtung ist wegen der durch die Mehrfachumlenkung des dünnen Trägerbandes ermöglichte geringe Baugröße der Vorrichtung minimiert.

Ebenfalls ist der erforderliche Energieeintrag und die thermische Trägheit der Vorrichtung deutlich vermindert, da auch der Backträger (Trägerband) selbst eine geringe Masse aufweist, und auch die erforderlichen, sekundären Konstruktionsteile geringvolumig und damit weniger masseintensiv im Vergleich zum Stand der Technik sind.

Vorzugsweise ist das Trägerband ein Kunststoffband und weist antiadhäsive Eigenschaften auf, so daß ein leichtes Ablösen des gebackenen Teiges, insbesondere Waffelteiges, vom Trägerband erfolgen kann, ohne daß ein permanenter Abstreifeingriff erforderlich ist.

Vorzugsweise ist das Trägerband ein teflonbeschichtetes Glasfaser- oder Glasgewebewand.

Überdies gestattet die bevorzugte fliegende Lagerung des Endlos-Trägerbandes über Backrollen ein kurzfristiges Auswechseln eines verschmutzten Trägerbandes, das dann außerhalb der Vorrichtung schonend und mit minimalem Verschleiß gereinigt werden kann. Die erfindungsgemäße Vorrichtung und das erfindungsgemäße Verfahren sind daher wesentlich weniger kostenintensiv und gestatten die Herstellung von Waffelröllchen bei wesentlich vermindertem verfahrens- und vorrichtungstechnischen Aufwand.

Vorzugsweise kann das Gehäuse einen Doppelmantel aufweisen, der zugleich zur Vorwärmung und Zuführung von Warmluft in das Innere des Backraumes, vorzugsweise von unten her, benutzt wird, während an der Oberseite des Backraumes eine Abströmöffnung für den feuchten Backwrasen vorgesehen ist.

Es ist ferner vorteilhaft, durch Teilung und Schwenklagerung der Teile des Gehäuses aneinander den Backraum leicht zugänglich zu gestalten, auch zur Auswechslung des Trägerbandes. Eine vorzugsweise vorgesehene Luftzirkulationseinrichtung kann, auch in Verbindung mit einer Regeleinrichtung für die Beheizung des Backraumes, sowohl eine Luftzwangsströmung innerhalb des Gehäuses wie auch ein möglichst gleichmäßiges Temperaturfeld innerhalb des Backraumes gewährleisten.

Die Erfindung wird nachfolgend anhand eines Ausführungsbeispieles und zugehörigen Zeichnungen näher erläutert. In diesen zeigen:
- Fig. 1: einen Waffelbackautomaten zur Herstellung von Waffelröllchen nach einem Ausführungsbeispiel der Erfindung in schematischer Darstellung und bei geöffnetem Gehäuse in perspektivischer Darstellung,
- Fig. 2: eine Längsschnittdarstellung des Waffelbackautomaten nach Fig. 1 in schematischer Ansicht,
- Fig. 3: eine Längsschnittdarstellung des Waffelbackautomaten nach Fig. 1 in im Vergleich zu Fig. 2 um 90° gedrehter Schnittdarstellung, schematisch,
- Fig. 4: eine Prinzipdarstellung eines Bandlaufes des Trägerbandes in einem Waffelbackautomaten nach Fig. 1,
- Fig. 5: eine schematische Darstellung eines Bandlaufes des Trägerbandes nach einem weiteren Ausführungsbeispiel der Erfindung,
- Fig. 6: einen Querschnitt eines Waffelbackautomaten nach einem weiteren Ausführungsbeispiel der Erfindung, und
- Fig. 7: eine schematische Schrägdarstellung des Waffelbackautomaten nach Fig. 6 bei geöffnetem Gehäuse und in perspektivischer Darstellung, vergleichbar wie Fig. 1.

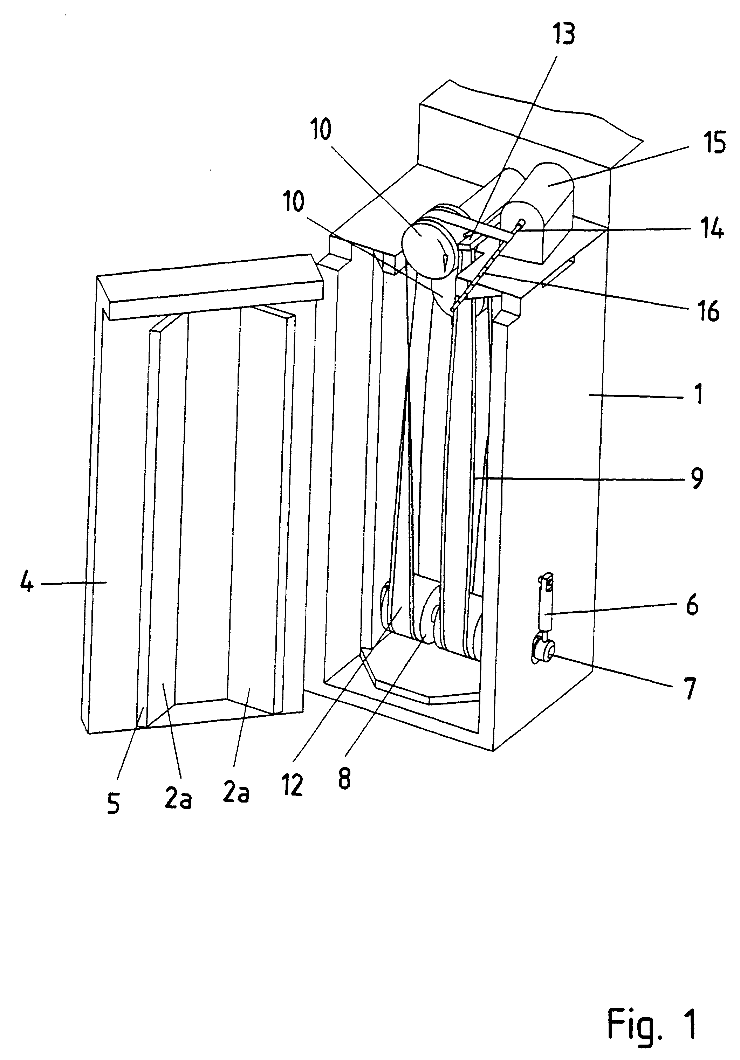

Figur 1 zeigt einen Waffelbackautomaten in schematischer Darstellung zur Herstellung von Waffelröllchen nach einem ersten Ausführungsbeispiel der vorliegenden Erfindung.

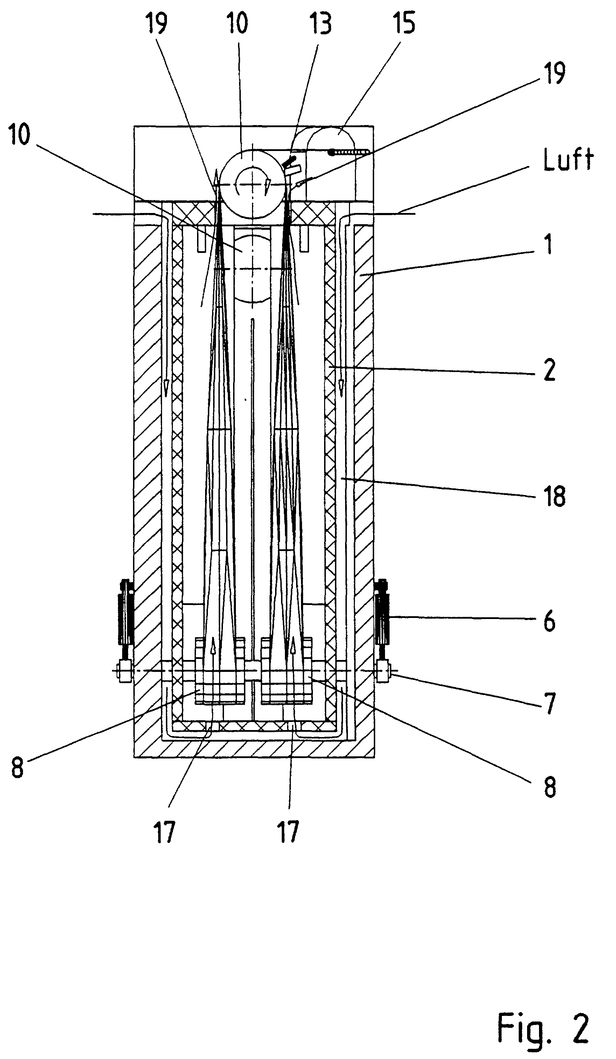

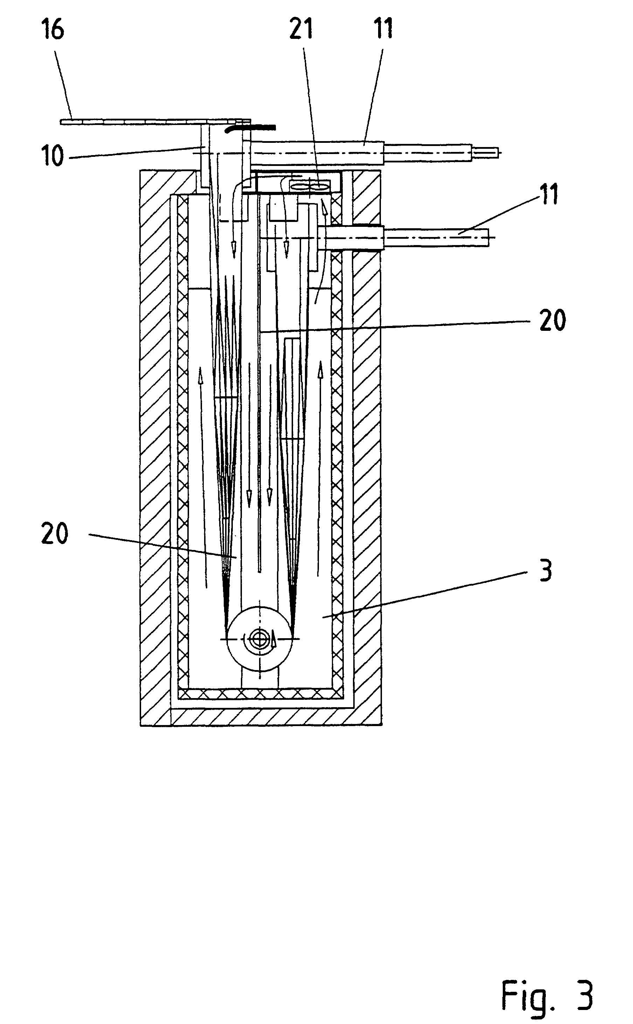

In einem Isolationsgehäuse 1 ist ein den Backraum 3 begrenzendes Innengehäuse 2 angeordnet, das in Verbindung mit einer Schwenktür 4 des Isolationsgehäuses 1 geöffnet werden kann und ein mit dieser verbundenes, vom übrigen Innengehäuse 2 wegschwenkbares Innengehäuseteil 5 aufweist, so daß der Backraum 3 innerhalb des Innengehäuses 1 umschlossen werden kann. Innerhalb des Innengehäuses 2 ist im unteren Bereich eine durch eine äußere Stell- und Spannvorrichtung 6 gelagerte Welle 7 mit zwei Bandrollen 8 angeordnet, die als untere Umlenkrollen für ein endloses Trägerband 9 dienen, dessen Bandlauf sich im wesentlichen vertikal durch den Backraum 3 des Innengehäuses 2 zwischen den unteren Bandrollen 8 und den oberen Bandrollen 10, von denen die außenliegende angetrieben ist, (s. auch Fig. 2 und 3) erstreckt.

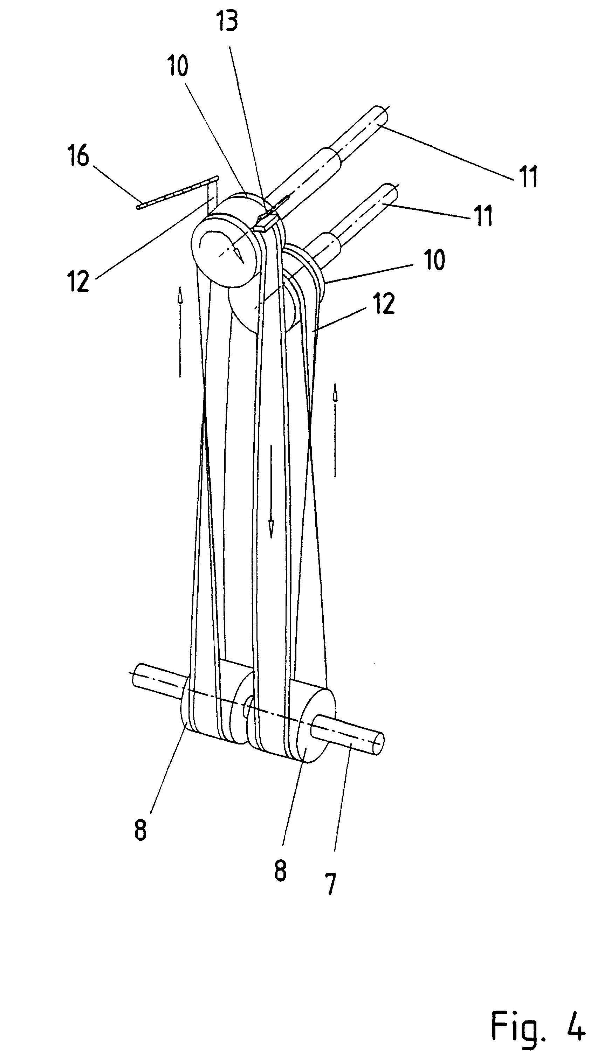

Der Bandlauf des Trägerbandes 9 zwischen den oberen Bandrollen 8 und den fliegend auf Wellen 11 gelagerten Bandrollen 10 ist in Fig. 4 schematisch dargestellt. Die obere, aus dem Backraum nach außen freiliegende Backrolle 10 ist von der Welle 11 angetrieben. Das Trägerband 9 ist als Endlosband, vorzugsweise aus wärmebeständigem Kunststoffmaterial, wie Teflon-beschichteten oder silikongummibeschichteten Glasfaserband, gebildet und kann dank der fliegenden Lagerung der oberen Bandrollen 10 mittels der Wellen 11 einfach abgezogen und dadurch auch einfach ausgewechselt werden. Das Trägerband 9 ist ein dünnes, hochflexibles und mit einer
antiadhäsiven, lebensmitteltauglichen Oberfläche versehenes Bandmaterial, das zumindest für den Backtemperaturbereich (z.B. 150°-220°C) die erforderliche Dauer-Temperaturbeständigkeit aufweist. Die mehrfache Umlenkung des Trägerbandes 9 führt zur für den Backprozeß erforderlichen Länge des Backträgers und damit zur erforderlichen Verweilzeit eines auf das Trägerband als stark zuckerhaltiger, flüssiger Teig aufgegebenen Teigbandes 12, das mit einer Teigauftragsvorrichtung 13 im Bereich der oberen Bandrolle 10 auf das Trägerband 9 aufgetragen wird.

Von besonderem Vorteil ist nicht nur die durch die Vertikalführung des Bandlaufes des Trägerbandes 9 erreichte, platzsparende Bauweise, die überdies durch das verwendete Trägerband und dessen Aufnahme zu einer trägheitsarmen Konstruktion und zu geringem Energiebedarf für den Backprozeß und die Beheizung des Backraumes 3 führt, sondern auch die jeweils um 90° versetzte Achsanordnung zwischen unteren Bandrollen 8 und oberen Bandrollen 10, die dazu führt, daß das Trägerband 9 und damit auch das Teigband 12 einen in Laufrichtung verdrehten Verlauf nimmt, so daß die Außenfläche des Teigbandes 12 und auch des Trägerbandes 9 in diesem Bereich schräg verläuft, mit der Folge, daß durch eine z.B. oktogonale Grundflächengestaltung des Innengehäuses 2 und Verwendung des Innengehäuses 2 zugleich als Heizeinrichtung für das Teigband 12 geneigte Abschnitte 2a des Innengehäuses 2 als Wärmestrahlungsfläche dem Teigband 12 weitgehend parallel und zugewandt gegenüberliegen, was die Gleichmäßigkeit des Backprozesses und der Wärmeabstrahlung in Richtung des Träger- und Teigbandes 9, 12 verbessert.

Der zuckerhaltige Teig haftet einerseits nach dem Aufgießen durch die Aufgießvorrichtung 13 hervorragend an dem Trägerband 9, löst sich aber andererseits auch durch dessen möglichst glatter, antiadhäsiver Kunststoffoberfläche aufgrund seiner hohen Formänderungsfähigkeit hervorragend wieder von dem Trägerband ab und kann nach Verlassen des Trägerbandes 9 an der oberen Bandrolle 10 direkt auf einen Wickeldorn 14 einer Wickelvorrichtung 15 geführt und zu einer Waffelhülse mehrfach schraubenförmig auf den Wickeldorn 14 aufgewickelt werden, um sodann durch eine hier nicht gezeigte Schneidvorrichtung und Ablängen der Waffelhülse 16 die Herstellung kurzer Waffelröllchen zu gestatten.

Obwohl die Heizeinrichtungen hier nicht speziell dargestellt sind und durch verschiedene Heizmedien realisiert werden können, dienen als Heizkörper insbesondere die Wände des Innengehäuses 2, die als Wärmestrahlungsflächen durch elektrische, Öl-, Gas- oder sonstige Heizmedien (Heißluft) erwärmt werden können.

Nachdem das Teigband 12 sich jeweils auf der Außenseite des Trägerbandes 9 und damit den Innenwänden des Innengehäuses 2 zugewandt befindet, ist das Teigband 12 der Wärmestrahlung von den Innenwänden des Innengehäuses 2 ausgesetzt. Vorzugsweise sind entlang der Innenfläche des Innengehäuses 2 elektrische Heizplatten, gegebenenfalls hinter einer Innenverkleidung aus Al-Material als Heizelemente angeordnet, während das Innengehäuse 2 im übrigen aus Dämmaterial innerhalb einer Außenblechverkleidung gebildet ist.

Wie aus Fig. 1 ersichtlich, ist das Innengehäuse 2 geteilt, so daß der Backraum 3 z.B. zum Auswechseln des Trägerbandes 9 oder für jede Art von Wartungs- oder Vorbereitungsarbeiten leicht zugänglich ist.

Vorzugsweise sind die Heizplatten innerhalb der Wandung des Innengehäuses 2 in mehreren Stufen unterschiedlicher Leistung und auch abschnittsweise auf unterschiedliche Leistungen schaltbar.

Wie auch aus den Fig. 2 und 3 ersichtlich, ist die obere Bandrolle 10, in deren Bereich das gebackene Teigband 12 (Waffelband) abgenommen und zu dem Wickeldorn 14 geführt wird, und in dessen Bereich auch das Aufgießen des flüssigen Teiges erfolgt, so angeordnet, daß die Bandrolle 10 teilweise außerhalb des Isolationsgehäuses 1 angeordnet und jedenfalls außerhalb desselben gelagert ist, so daß das Eintragen und Austragen des Teiges bzw. Teigbandes auf bzw. von dem Trägerband 9 in günstiger Weise möglich ist. Im bodenseitigen Bereich ist - wie in Fig. 2 gezeigt - das Innengehäuse 2 mit Lufteinlaßöffnungen 17 versehen, die mit einem Luftströmungskanal 18, gebildet zwischen dem Isolationsgehäuse 1 und dem Innengehäuse 2, verbunden sind. Im oberen Teil des Innengehäuses 2 sowie des Isolationsgehäuses 1 weisen die Gehäuse Luftauslaßöffnungen 19 auf, so daß nicht nur vorgewärmte, trockene Umgebungsluft von unten in den Backraum 3 eingeführt, sondern auch das Ausströmen von feuchten Backwrasen und eine entsprechende Warmluftzirkulation innerhalb des Backraumes 3 möglich sind. In Verbindung mit Wärmeteitblechen 20, die auch als Luftführungseinrichtungen innerhalb des Backraumes 3 wirksam sind, kann einerseits eine Zufuhr von Strahlungswärme z.B. zur Rückseite des Transportbandes 9 für eine auch rückseitige Erwärmung desselben möglich sein, wenn - wie gezeigt - die Wärmeleitbleche mit der durch das Innengehäuse gebildeten Heizeinrichtung wärmeleitend verbunden und an diesem Innengehäuse angebracht sind, andererseits wird durch ein Gebläse 21, vorzugsweise im oberen Bereich des Waffelbackautomaten und in Strömungsverbindung mit dem Backraum 3 innerhalb desselben eine Luftzwangsumwälzung und Zwangsströmung eingerichtet, wie dies durch die Luftströmungspfeile in den Fig. 2 und 3 angedeutet ist. Auf diese Weise kann eine gleichmäßige Zwangsumwälzung der erwärmten Luft innerhalb des Backraumes 3 zur Erzielung eines möglichst gleichmäßigen Temperaturfeldes stattfinden.

Überdies kann eine - hier nicht gezeigte - Regeleinrichtung in Verbindung mit Temperaturfühlern, z.B. sowohl im Bereich der Bandrollen 8, 10 als auch des Transportbandes 9 oder der Wände des als Heizeinrichtung fungierenden Innengehäuses 2 vorgesehen sein kann, durch Regelung der Heizleistung einen vorgegebenen Temperatursollwert und eine konstante Backtemperatur zu erreichen.

Die in Verbindung mit dem Gebläse durch den Backraum gesaugte Luft wird auf ihrem Weg in den Backraum durch den Luftführungskanal 18 entlang der Rückseite des warmen Innengehäuses 2 geführt und auf diesem Weg erwärmt, so daß die Luft bereits vorgewärmt in den Backraum 3 durch die Einlaßöffnungen 17 eintritt. Sodann erfolgt eine weitere Aufheizung derselben in Verbindung mit der Heizeinrichtung des Innengehäuses 2, so daß die erforderliche Wärme für das Backen des Teigbandes 12 und für die Erwärmung des Trägerbandes 9 durch Konvektion und Strahlung auf diese übertragen wird.

Auf diese Weise wird eine sehr kompakte, kleinbauende, unkomplizierte und - wegen ihrer geringen Masse - sehr trägheitsarme Waffelbackeinrichtung realisiert, die mit vergleichsweise geringem Energieeinsatz zu einer hervorragenden Backleistung führt, eine ausreichende Länge des Backträgers bereitstellt und einen minimalen Wartungsbedarf hat, da aufgrund der adhäsiven Eigenschaften des vorzugsweise mit einer Kunststoffoberfläche versehenen Trägerbandes 9 eine beständige Reinigung desselben entfällt. Überdies ist das Trägerband 9 leicht auswechselbar. Hierfür ist die obere fliegende Lagerung der Bandrollen 10 von besonderer Bedeutung.

Gegebenenfalls kann das Waffelband nach dem Backen und vor dem Aufwickeln auf den Wickeldorn auch bereits geschnitten werden, um sogleich einzelne Waffelröllchen zu wickeln. Anstelle des Wickelns kann auch eine andere Formgebung des Waffelbandes erfolgen.

Das Trägerband 9 kann auch aus anderem Material als dem vorgenannten bestehen, wobei Eigenschaften, wie hohe Flexibilität, Wärmebeständigkeit, Lebensmitteltauglichkeit und leichte (restlose) Ablösbarkeit des Teigbandes von der Oberfläche des Trägerbandes 9 (antiadhäsive Eigenschaften) von besonderer Bedeutung sind.

Durch die geringe Masse aller erwärmten Teile innerhalb der Backvorrichtung wird die aufgebrachte Heizleistung in hohem Maße direkt auf das Backgut übertragen, ohne unnötige Erwärmung zusätzlicher, für den Backprozeß unwesentlicher Teile. Damit wird die Energiebilanz wesentlich verbessert. Durch eine Anpassung der Gehäusegestaltung an den über vertikale Abschnitte "verdrehten" Verlauf des Trägerbandes 9 mit dem Teigband 12 ist eine hervorragende gleichmäßige Wärmebeaufschlagung des Teigbandes 12 und damit ein hervorragendes Backergebnis gegeben.

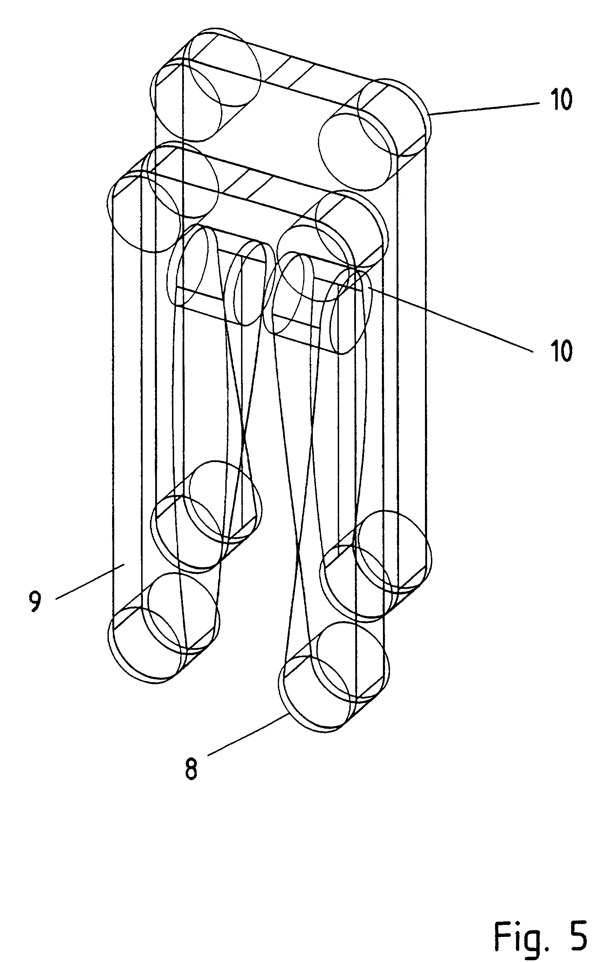

Selbstverständlich können auch mehrere Umlenkungen für das Trägerband 9 und größere Einrichtungen vorgesehen sein, wie das beispielhaft für Bandläufe eines Endlos-Trägerbandes 12 in Fig. 5 schematisch verdeutlicht ist, wobei im unteren Bereich vier Bandrollen 8 und zusätzliche Bandrollen 10 in einem mittleren und oberen Bereich (insgesamt 10 Bandrollen) vorgesehen sind.

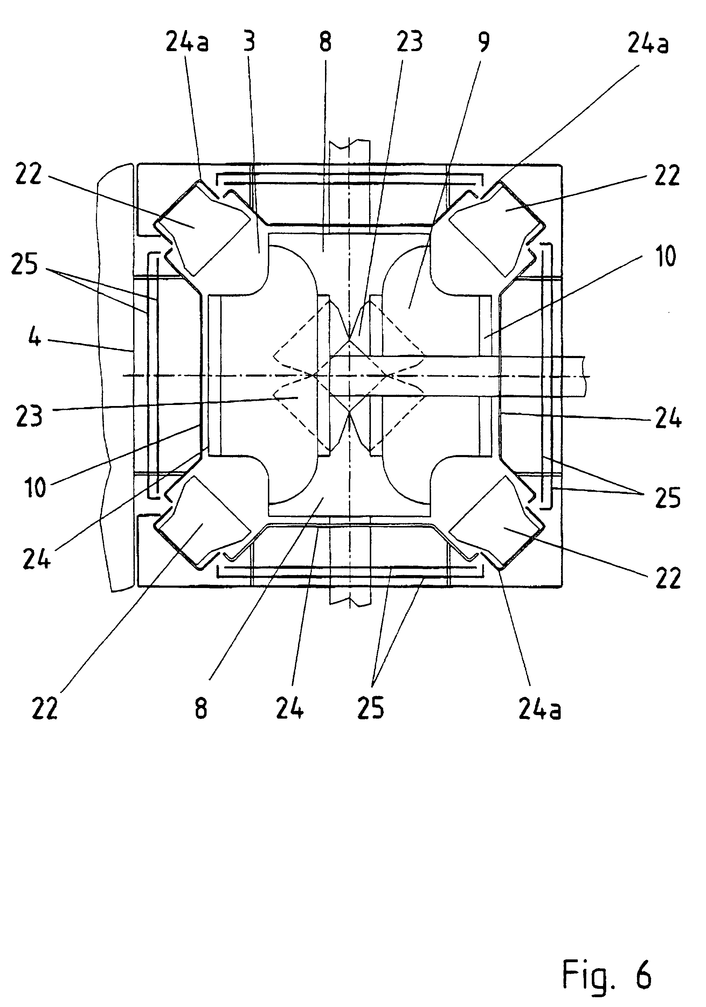

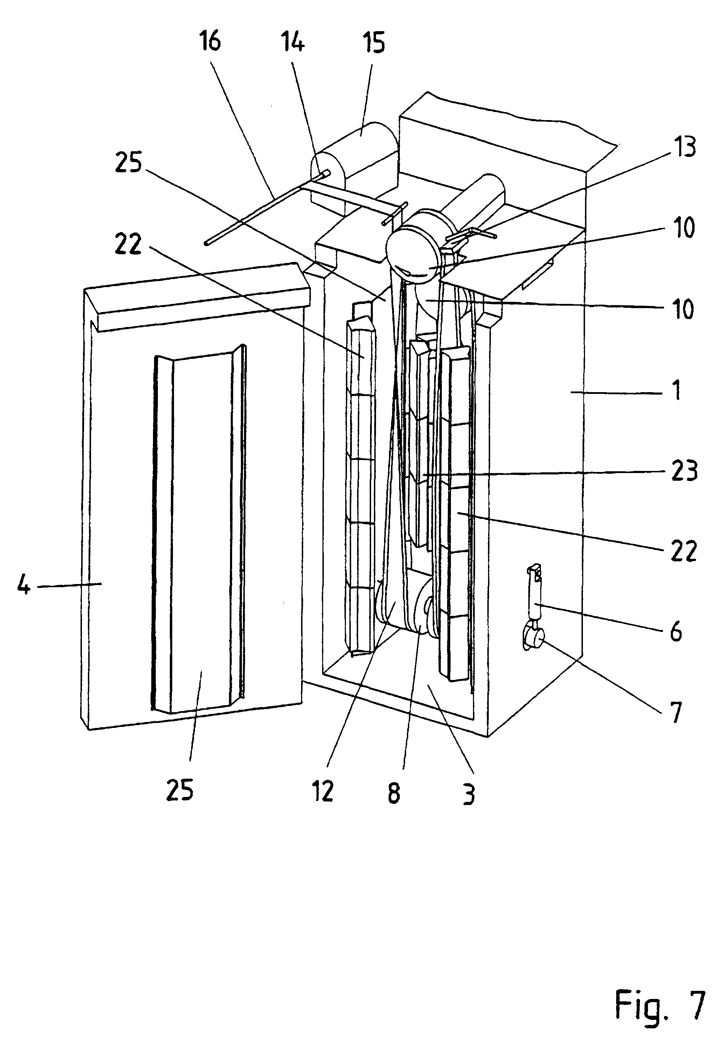

Ein weiteres Ausführungsbeispiel des Waffelbackautomaten nach der Erfindung ist in den Fig. 7 (perspektivische Schrägdarstellung) und Fig. 6 (schematische Querschnittsdarstellung) gezeigt.

Dieses Ausführungsbeispiel unterscheidet sich von dem vorerläuterten Ausführungsbeispiel nach Fig. 1 vor allem durch die Ausgestaltung der Heizvorrichtung.

Zur Herabsetzung des Isolationsaufwandes bei gleichzeitig verbessertem und variabel sowie punktuell in Bezug auf den Backraum steuerbarem Wärmeprofil innerhalb des Backraumes sind in diesem Ausführungsbeispiel die Heizelemente und entsprechenden Wärmestrahlflächen nicht aktiv durch die Innenwände des Innengehäuses gebildet, sondern es werden, vorzugsweise diagonal opponierend angeordnete Wärmestrahler, insbesondere elektrisch oder gasbeheizte Infrarotstrahler 22 vorgesehen, so daß die Beheizung des Backraumes 3 von mehreren Seiten durch Wärmestrahler 22 erfolgt. Wie in den Fig. 6 und 7 gezeigt, sind für dieses Ausführungsbeispiel die Wärmestrahler 22 in opponierender Diagonalanordnung praktisch auf den Eckpunkten eines Rechteckes oder Quadrates, das den Backraum im wesentlichen begrenzt, angeordnet.

Zugleich ist in Fig. 6 in unterbrochenen Linien angedeutet und in Fig. 7 auch dargestellt, daß korrespondierende (vorzugsweise in ihrer axialen Abmessung) kleinere Wärmestrahler, insbesondere Infrarotstrahler 23 im Innenraum des Backraumes 3, d.h. zu der jeweils zugewandten Rückseite des Trägerbandes 9 gerichtet, angeordnet sind. Auf diese Weise ist nicht nur eine höhere Variabilität hinsichtlich der Temperaturverteilung im Backraum und Steuerbarkeit der Temperatur durch Ausrüstung der Wärmestrahler 22, 23 mit in Abhängigkeit von der Anordnungsposition unterschiedlicher Heizleistung erreicht, es wird auch der unmittelbare Wärmeeintrag in das Teigband 12 gefördert.

Diese Anordnung von Wärmestrahlern, insbesondere gas- oder elektrischbeheizten Infrarotstrahlern innerhalb des Raumes, der von dem Trägerband 9 umgrenzt wird, ist selbstverständlich nicht zwingend, sondern kann in Abhängigkeit von den jeweiligen Notwendigkeiten hinsichtlich der Zykluszeiten und der Banddurchlaufgeschwindigkeit des Trägerbandes 9 mit dem Teigband 12 gewählt werden.

Der Backraum 3 wird zwischen den (äußeren) Infrarotstrahlern 22 durch Reflexionswände 24 abgeschirmt, gegebenenfalls auch unter Einschluß der nach außen weisenden Rückseiten der Wärmestrahler 22 mit Reflexionswänden 24a. Durch diese Abschirmung wird nicht nur der Wärmeisolationsaufwand und zugleich die unerwünschte Abstrahlung der Wärme in die Umgebung minimiert, sondern zugleich auch die eingestrahlte Heizleitung durch Reflexion in den Backraum zurück optimal für den Backprozeß genutzt.

Ferner sind äußere, vorzugsweise in Mehrfach-Parallelanordnung ausgeführte Prallwände 25 vorgesehen, die sich im wesentlichen parallel zu den Reflexionswänden 24 erstrecken. Diese Prallwände 25 gestatten es nicht nur, in dem Raum zwischen den Reflexionswänden 24 und den Prallwänden 25 eine Luft-Zwangszirkulation zur Kühlung bzw. Homogenisierung des Temperaturfeldes im Backraum zu bewirken, sondern stellen auch einen hohen Wärmeschutz nach außen (Isolationswirkung) her.

Mit einer solchen Anordnung, wie sie in den Fig. 6 und 7 schematisch verdeutlicht ist, kann auf den Einsatz spezieller Wärmedämmstoffe praktisch vollständig verzichtet werden. Die Luftkühlung zwischen Reflexionswänden 24 und Prallwänden 25 sowie auch zwischen den Prallwänden 25 sorgt für eine Minimierung möglicher Wärmeabstrahlung nach außen und trägt zur besonders günstigen Energiebilanz eines Backautomaten nach diesem Ausführungsbeispiel der Erfindung bei.

Die Wärmestrahler 22, 23 können selbstverständlich jeweils individuell hinsichtlich ihrer Heizleistung ausgelegt und unabhängig voneinander angesteuert werden, um den Temperaturverlauf im Backraum 3 dem Backprozeß anzupassen.

Die diagonal-opponierende Anordnung der Infrarotstrahler 22 führt in Verbindung mit den Wärme-Reflexionswänden 24 zwischen den Wärmestrahlern 22, die den Backraum 3 umschließen, zu einer besonderen Homogenisierung des Temperaturfeldes im Backraum 3, wobei in Kombination mit den Prallwänden 25 eine nochmalige Wärmebarriere hinsichtlich der Abstrahlung nach außen und zusätzliche Luftführungskanäle für die Ausbildung einer Zwangsströmung von Kühlluft innerhalb des den Backraum umgebenden Raumes erreicht wird.

Im übrigen ist der Backautomat nach dem Ausführungsbeispiel gemäß Fig. 6 und 7 nach den gleichen Prinzipien gestaltet, wie diese bereits in Verbindung mit dem ersten Ausführungsbeispiel erläutert wurden.

Zugleich verdeutlicht das Ausführungsbeispiel nach Fig. 7, daß die Aufgießvorichtung 13 auch auf der anderen Seite in Bezug auf die obere Bandrolle 10 angeordnet werden kann und die Wickelvorrichtung 15 mit dem Wickeldorn 14 zu Ausbildung der Waffelhülse 16 auch auf der von vorn gesehen linken Seite des Gerätes angeordnet sein kann.

Es ist im übrigen darauf hinzuweisen, daß die generelle Bandführung und Hauptorientierung der Waffelbackvorrichtung zur Herstellung von Waffelröllchen durch Backen von Teigbändern keinesfalls auf die hier dargestellte vertikale Ausrichtung als Hauptachse beschränkt ist, vielmehr kann die Führung des Trägerbandes auch im wesentlichen horizontal erfolgen, wobei das Trägerband 9 entlang seiner Längsachse gedreht ist.

Mit der Tür 4 ist eine vordere Prallwand 25 verbunden (s. Fig. 7).

Im übrigen wird bevorzugt, daß auf der Abgabeseite des gebackenen Teigbandes 12 zumindest ein erster Abstreifer mit dem Trägerband 9 permanent in Anlage ist, wobei dieser vorzugsweise ebenfalls zumindest in den Kontaktbereich mit dem Trägerband 9 aus Teflonmaterial besteht oder beschichtet ist, und das Trägerband 9 ebenfalls vorzugsweise eine Teflonbeschichtung aufweist, so daß die miteinander in Kontakt stehenden Abstreifer-/Band-Flächen eine Materialpaarung mit gleichen Materialien aufweisen. Hierdurch wird der Verschleiß der Oberfläche des Trägerbandes 9 minimiert.

Vorzugsweise ist nach dem ersten Abstreifer auch noch ein zweiter Abstreifer vorgesehen.

Zum Ausgleich von Dickenschwankungen des Aufgusses und somit des Teigbandes 12 ist die Aufgießvorrichtung 13 vorzugsweise mehrachsig bewegbar, so daß ein Teigband z.B. in einer Dicke von 0,2 bis 0,6 mm mit hoher Genauigkeit auf das Trägerband 9 aufgegossen und ausgebildet bzw. gebacken werden kann.

Die Ausführungen nach den Ausführungsbeispielen gemäß Fig. 1 und Fig. 6 können auch in Kombination miteinander angewendet werden, insbesondere was die Ausgestaltung der Beheizung des Backraumes 3 durch Infrarotstrahler und/oder die Wärmeabstrahlung von vorzugsweise den Backraum 3 umgebenden Beheizungswänden betrifft.

Die Waffelbackeinrichtung nach der vorliegenden Erfindung, insbesondere zur Herstellung von Waffelröllchen, zeichnet sich durch die Bereitstellung der erforderlichen Länge des Backträgers auf engstem Raum und somit durch einen kompakten Aufbau eine geringe Masse der zu erwärmenden Teile und eine hohe Flexibilität und geringe Wärmespeicherkapazität des Trägerbandes 9 aus, so daß nicht nur für die großindustrielle Anwendung, sondern auch für kleinere Wirtschaftseinheiten ein einfach handhabbares Gerät zur kundennahen Produktion von Waffeln, insbesondere Waffelröllchen, zur Verfügung steht.

## Patentansprüche

1. Verfahren zum Backen von Teigbändern (12), insbesondere zur Herstellung von Waffeln, wie z.B. Waffelröllchen, bei dem ein zuckerhaltiger Teig auf ein flexibles und unter mehrfacher Richtungsänderung durch einen beheizten Backraum (3) geführtes Trägerband (9) in einer Spur oder mehrspurig aufgegeben, in der Atmosphäre des Backraumes gebacken und an einer Austrittsseite von diesem abgenommen wird.

2. Verfahren nach Anspruch 1, **dadurch gekennzeichnet, daß** der Teig auf ein dünnes, endloses, hochflexibles, lebensmitteltaugliches, wärmebeständiges und antiadhäsives Kunststoffmaterialband (9) aufgegeben wird.

3. Verfahren nach Anspruch 1 oder 2, **dadurch gekennzeichnet, daß** die gebackenen Teigbänder (12) anschließend auf Wickeldorne (14) aufgewickelt werden.

4. Verfahren nach zumindest einem der vorhergehenden Ansprüche 1 bis 3, **dadurch gekennzeichnet, daß** der auf den Wickeldorn (14) aufgewickelte Teigbandwickel zu Waffelröllchen abgelängt wird.

5. Verfahren nach zumindest einem der vorhergehenden Ansprüche 1 bis 4, **dadurch gekennzeichnet, daß** das Trägerband, insbesondere unter Mehrfachumlenkung im wesentlichen vertikal oder horizontal durch den Backraum geführt wird.

6. Vorrichtung zum Backen von Teigbändern (12), insbesondere zur Herstellung von Waffeln, wie z.B. Waffelröllchen, mit einem flexiblen, unter Mehrfachumlenkung durch einen beheizten Backraum (3) geführten Trägerband (9), wobei das Trägerband (9) ein Kunststoff- oder kunststoffbeschichtetes Band und über Bandrollen umgelenkt ist.

7. Vorrichtung nach Anspruch 6, **dadurch gekennzeichnet, daß** das Trägerband (9) ein Endlosband, insbesondere ein hochflexibles Kunststoff- oder kunststoffbeschichtetes Band ist.

8. Vorrichtung nach Anspruch 6 oder 7, **dadurch gekennzeichnet, daß** eine Trägerband-Mehrfachumlenkeinrichtung mit fliegend gelagerten Bandrollen (8;10) vorgesehen ist.

9. Vorrichtung nach Anspruch 8, **dadurch gekennzeichnet, daß** die Achsen zwischen zwei in Laufrichtung des Trägerbandes (9) abfolgend angeordneten Bandrollen (8;10) im Winkel zueinander, vorzugsweise unter ca. 90° zueinander, versetzt angeordnet sind.

10. Vorrichtung nach Anspruch 8 oder 9, **dadurch gekennzeichnet, daß** die Trägerband-Mehrfachumlenkeinrichtung eine Mehrzahl oberer und unterer Bandrollen (8;10) aufweist.

11. Vorrichtung nach zumindest einem der vorhergehenden Ansprüche 6 bis 10, **gekennzeichnet durch** ein geteiltes, aufklappbares Gehäuse (1;2).

12. Vorrichtung nach zumindest einem der vorhergehenden Ansprüche 6 bis 11, **gekennzeichnet durch** Heizeinrichtungen für den Backraum (3) innerhalb des Gehäuses (1;2).

13. Vorrichtung nach zumindest einem der vorhergehenden Ansprüche 6 bis 11, **gekennzeichnet durch** Infrarotstrahler, vorzugsweise in Verbindung mit und/oder entlang von Innenwänden des Gehäuses (2).

14. Vorrichtung nach zumindest einem der vorhergehenden Ansprüche 11 bis 13, **dadurch gekennzeichnet, daß** die Innenwände des Gehäuses (2) zumindest teilweise Wärmestrahlungsflächen bilden.

15. Vorrichtung nach zumindest einem der vorhergehenden Ansprüche 12 bis 14, **dadurch gekennzeichnet, daß** die Innenwände des Gehäuses (2) zumindest teilweise beheizbar sind und Wärmeenergie auf das Trägerband (9) durch Konvektion und/oder Strahlung übertragbar ist, wobei eine Temperatur des Trägerbandes (9) und/oder der Heizeinrichtung des Backraumes (3), insbesondere der Innenwände des Gehäuses (2), in Abhängigkeit von einem vorgegebenen Temperatursollwert kontinuierlich oder diskret regelbar ist.

16. Vorrichtung nach Anspruch 15, **dadurch gekennzeichnet, daß** der Temperatursollwert im Bereich der Backtemperatur des Teigbandes (10), jedoch unterhalb einer maximal zulässigen Betriebstemperatur des Trägerbandes (9) liegt.

17. Vorrichtung nach zumindest einem der vorhergehenden Ansprüche 12 bis 16, **dadurch gekennzeichnet, daß** die Innenwände des Backraumes (3) mittels Elektroenergie, Gas, Heißluft oder Heizöl beheizbar sind.

18. Vorrichtung nach zumindest einem der vorhergehenden Ansprüche 12 bis 16, **gekennzeichnet durch** Wärmeleitbleche (20) in Verbindung mit der Heizeinrichtung, insbesondere den Innenwänden des Gehäuses (2), die vorspringend zwischen Abschnitte des Bandlaufes des Trägerbandes (9) ragen, insbesondere zur Abgabe von Wärmestrahlung in Richtung auf eine Rückseite des Trägerbandes (9).

19. Vorrichtung nach zumindest einem der vorhergehenden Ansprüche 14 bis 18, **dadurch gekennzeichnet, daß** Wärmestrahlungsflächen im wesentlichen parallel zwischen 90° versetzt angeordneten Bandrollen (8;10) umgelenkten Abschnitten des Transportbandes angeordnet sind.

20. Vorrichtung nach zumindest einem der vorhergehenden Ansprüche 6 bis 19, **gekennzeichnet durch** eine Doppelwandstruktur des Gehäuses (1;2), mit einem Medienströmungskanal, insbesondere Luftströmungskanal (18), zwischen einer Innenwand (2) und einer Außenwand (1) des Gehäuses (1;2).

21. Vorrichtung nach zumindest einem der vorhergehenden Ansprüche 6 bis 20, **gekennzeichnet durch** eine Luftumwälzeinrichtung, insbesondere ein Gebläse (21), zur Homogenisierung eines Temperaturfeldes und/oder zur Bildung einer Zwangsströmung, innerhalb des Backraumes (3), insbesondere in Verbindung mit Wärmeleitblechen (20), die mit Innenwänden des Gehäuses in wärmeleitender Verbindung sind.

22. Vorrichtung nach zumindest einem der vorhergehenden Ansprüche 6 bis 21, **dadurch gekennzeichnet, daß** eine Laufrichtung des Trägerbandes (9) zwischen den Bandrollen (8;10) im wesentlichen vertikal oder horizontal ist.

23. Vorrichtung nach zumindest einem der vorhergehenden Ansprüche 6 bis 22, **dadurch gekennzeichnet, daß** eine Schneidvorrichtung stromauf oder stromab der Wickelvorrichtung für das gebackene Teigband vorgesehen ist.

24. Vorrichtung nach zumindest einem der vorhergehenden Ansprüche 6 bis 23, **dadurch gekennzeichnet, daß** zumindest ein Wickeldorn der Wickelvorrichtung eine Achse schwenkbar für unterschiedliche Aufwickelwinkel des gebackenen Teigbandes gelagert ist.

25. Vorrichtung nach zumindest einem der vorhergehenden Ansprüche 6 bis 24, **dadurch gekennzeichnet, daß** in den Backraum (3) gerichtete Wärmestrahler (22), insbesondere in diagonal-opponierender Anordnung vorgesehen sind, die insbesondere als gas- oder elektrisch beheizter Infrarotstrahler (22, 23) ausgebildet sind.

26. Vorrichtung nach Anspruch 25, **dadurch gekennzeichnet, daß** Wärmestrahler (22, 23) beiderseits des Trägerbandes (9), d.h. in Strahlrichtung sowohl auf eine Vorder- als auch eine Rückseite des Trägerbandes (9) gerichtet, angeordnet sind.

27. Vorrichtung nach zumindest einem der vorhergehenden Ansprüche 25 oder 26, **dadurch gekennzeichnet, daß** die Wärmestrahler (22) diagonal-opponierend im wesentlichen angeordnet auf den Eckpunkten eines Rechteckes oder Quadrates angeordnet ist.

28. Vorrichtung nach zumindest einem der vorhergehenden Ansprüche 25 bis 27, **dadurch gekennzeichnet, daß** zwischen den Wärmestrahlern (22) Reflexionswände (24) angeordnet sind.

29. Vorrichtung nach zumindest einem der vorhergehenden Ansprüche 25 bis 28, **dadurch gekennzeichnet, daß** Rückseiten der Wärmestrahler (22) mit Reflexionswänden (24a) abgeschirmt sind.

30. Vorrichtung nach zumindest einem der vorhergehenden Ansprüche 25 bis 29, **dadurch gekennzeichnet, daß** beabstandet zu den Reflexionswänden (24) zumindest eine Prallwand (25), vorzugsweise in Doppelanordnung, vorgesehen und zwischen der Prallwandanordnung (25) und der Reflexionswand zumindest ein Luftzirkulationsraum gebildet ist.

31. Vorrichtung nach zumindest einem der vorhergehenden Ansprüche 25 bis 30, **dadurch gekennzeichnet, daß** innerhalb eines von dem Trägerband umgrenzten Kernbereiches des Backraumes Wärmestrahler (23), insbesondere Infrarotstrahler, in opponierender Anordnung zu den äußeren Wärmestrahlern (22) angeordnet sind.

32. Vorrichtung nach Anspruch 31, **dadurch gekennzeichnet, daß** die Heizleistung der inneren und/oder äußeren Wärmestrahler (23, 22) verschieden, insbesondere variabel und individuell steuerbar ist.

33. Vorrichtung nach zumindest einem der vorhergehenden Ansprüche 25 bis 32, **dadurch gekennzeichnet, daß** mit einer Tür (4) eine Prallwand (25) verbunden ist.

34. Vorrichtung nach zumindest einem der vorhergehenden Ansprüche 6 bis 33, **dadurch gekennzeichnet, daß** eine Aufgießvorrichtung (13) zur Einstellung und/oder Regulierung einer Dicke des Aufgusses bzw. Teigbandes (12) mehrachsig einstellbar ist.

35. Vorrichtung nach zumindest einem der vorhergehenden Ansprüche 6 bis 34, **dadurch gekennzeichnet, daß** mit dem Transportband, insbesondere Teflon-beschichteten Glasfaserband, zumindest ein erster Abstreifer, vorzugsweise mit einem Kontaktmaterial im Abstreiferbereich vorgesehen ist, das demjenigen der Oberfläche des Trägerbandes (12) entspricht.

36. Vorrichtung nach Anspruch 35, **dadurch gekennzeichnet, daß** ein erster und ein zweiter Abstreifer in Anlage an dem Transportband vorgesehen sind.

## Claims

1. Method of baking dough strips (12), in particular for the manufacture of wafers, such as e.g. wafer mini-rolls, in which a sugar-containing dough is fed in one or more tracks onto a flexible carrier belt (9) conveyed with multiple changes of direction through a heated baking chamber (3), is baked in the atmosphere of the baking chamber and removed from the latter at an outlet side.

2. Method according to claim 1, **characterized in that** the dough is fed onto a thin, continuous, highly flexible, foodgrade, heat-resistant and anti-adhesive plastic material belt (9).

3. Method according to claim 1 or 2, **characterized in that** the baked dough strips (12) are then wound onto winding mandrels (14).

4. Method according to at least one of the preceding claims 1 to 3, **characterized in that** the coil of dough strip wound onto the winding mandrel (14) is cut into lengths to form wafer mini-rolls.

5. Method according to at least one of the preceding claims 1 to 4, **characterized in that** the carrier belt is conveyed, in particular with multiple deflection, substantially vertically or horizontally through the baking chamber.

6. Apparatus for baking dough strips (12), in particular for the manufacture of wafers, such as e.g. wafer mini-rolls, comprising a flexible carrier belt (9) conveyed with multiple deflection through a heated baking chamber (3), wherein the carrier belt (9) is a plastic or plastic-coated belt and is deflected by means of idler rollers.

7. Apparatus according to claim 6, **characterized in that** the carrier belt (9) is a continuous belt, in particular a highly flexible plastic or plastic-coated belt.

8. Apparatus according to claim 6 or 7, **characterized in that** a carrier belt multiple-deflection device comprising overhung idler rollers (8; 10) is provided.

9. Apparatus according to claim 8, **characterized in that** the axes between two idler rollers (8; 10) disposed successively in running direction of the carrier belt (9) are disposed offset at an angle relative to one another, preferably by ca. 90° relative to one another.

10. Apparatus according to claim 8 or 9, **characterized in that** the carrier belt multiple deflection device comprises a plurality of top and bottom idler rollers (8; 10).

11. Apparatus according to at least one of the preceding claims 6 to 10, **characterized by** a split, swing-open housing (1; 2).

12. Apparatus according to at least one of the preceding claims 6 to 11, **characterized by** heating devices for the baking chamber (3) inside the housing (1; 2).

13. Apparatus according to at least one of the preceding claims 6 to 11, **characterized by** infrared radiators, preferably in combination with and/or along inner walls of the housing (2).

14. Apparatus according to at least one of the preceding claims 11 to 13, **characterized in that** the inner walls of the housing (2) at least partially form heat radiation surfaces.

15. Apparatus according to at least one of the preceding claims 12 to 14, **characterized in that** the inner walls of the housing (2) are at least partially heatable and thermal energy is transferable by convection and/or radiation to the carrier belt (9), wherein a temperature of the carrier belt (9) and/or of the heating device of the baking chamber (3), in particular of the inner walls of the housing (2), is continuously or discretely controllable as a function of a preset setpoint temperature value.

16. Apparatus according to claim 15, **characterized in that** the setpoint temperature value lies in the region of the baking temperature of the dough strip (10) but below a maximum permissible operating temperature of the carrier belt (9).

17. Apparatus according to at least one of the preceding claims 12 to 16, **characterized in that** the inner walls of the baking chamber (3) are heatable by means of electrical energy, gas, hot air or heating oil.

18. Apparatus according to at least one of the preceding claims 12 to 16, **characterized by** heat-directing baffles (20) in conjunction with the heating device, in particular with the inner walls of the housing (2), which rise so as to project between portions of the belt run of the carrier belt (9), in particular for releasing heat radiation in the direction of a rear side of the carrier belt (9).

19. Apparatus according to at least one of the preceding claims 14 to 18, **characterized in that** heat radiation surfaces are disposed substantially parallel to portions of the conveyor belt deflected between idler rollers (8; 10) arranged offset by 90°.

20. Apparatus according to at least one of the preceding claims 6 to 19, **characterized by** a double-walled structure of the housing (1; 2), having a medium flow channel, in particular an air flow channel (18), between an inner wall (2) and an outer wall (1) of the housing (1; 2).

21. Apparatus according to at least one of the preceding claims 6 to 20, **characterized by** an air circulating device, in particular a fan (21), for homogenizing a temperature field and/or for generating a forced flow, inside the baking chamber (3), in particular in conjunction with heat-directing baffles (20), which are in heat-conducting connection with the inner walls of the housing.

22. Apparatus according to at least one of the preceding claims 6 to 21, **characterized in that** a running direction of the carrier belt (9) between the idler rollers (8; 10) is substantially vertical or horizontal.

23. Apparatus according to at least one of the preceding claims 6 to 22, **characterized in that** a cutting apparatus is provided upstream or downstream of the winding apparatus for the baked dough strip.

24. Apparatus according to at least one of the preceding claims 6 to 23, **characterized in that** at least one winding mandrel of the winding apparatus is mounted pivotally an axis for different winding angles of the baked dough strip.

25. Apparatus according to at least one of the preceding claims 6 to 24, **characterized in that** heat radiators (22), which are directed into the baking chamber (3), are provided in particular in a diagonally opposite arrangement, which in particular take the form of gas- or electrically heated infrared radiators (22, 23).

26. Apparatus according to claim 25, **characterized in that** heat radiators (22, 23) are disposed on both sides of the carrier belt (9), i.e. directed in radiation direction both towards a front side and a rear side of the carrier belt (9).

27. Apparatus according to at least one of the preceding claims 25 or 26, **characterized in that** the heat radiators (22) are disposed substantially in a diagonally opposite arrangement at the corner points of a rectangle or square.

28. Apparatus according to at least one of the preceding claims 25 to 27, **characterized in that** reflective walls (24) are disposed between the heat radiators (22).

29. Apparatus according to at least one of the preceding claims 25 to 28, **characterized in that** rear sides of the heat radiators (22) are screened off by reflective walls (24a).

30. Apparatus according to at least one of the preceding claims 25 to 29, **characterized in that** at a distance from the reflective walls (24) at least one baffle wall (25), preferably in a double arrangement, is provided and at least one air circulation space is formed between the baffle wall arrangement (25) and the reflective wall.

31. Apparatus according to at least one of the preceding claims 25 to 30, **characterized in that** disposed inside a core region of the baking chamber bounded by the carrier belt are heat radiators (23), in particular infrared radiators, which are arranged opposite the outer heat radiators (22).

32. Apparatus according to claim 31, **characterized in that** the heat output of the inner and/or outer heat radiators (23, 22) is controllable in a diverse, in particular variable and individual manner.

33. Apparatus according to at least one of the preceding claims 25 to 32, **characterized in that** a baffle wall (25) is connected to a door (4).

34. Apparatus according to at least one of the preceding claims 6 to 33, **characterized in that** an infusion apparatus (13) for setting and/or controlling a thickness of the infusion and/or dough strip (12) is capable of multi-axis adjustment.

35. Apparatus according to at least one of the preceding claims 6 to 34, **characterized in that** with the conveyor belt, in particular a Teflon-coated glass-fibre belt, at least one first cleaning blade is provided, preferably with a contact material in the cleaning region which corresponds to the material of the surface of the carrier belt (12).

36. Apparatus according to claim 35, **characterized in that** a first and a second cleaning blade are provided in abutment with the conveyor belt.

## Revendications

1. Procédé de cuisson de bandes de pâte (12), en particulier pour la fabrication de gaufres, comme par exemple de petits rouleaux de gaufre, dans lequel une pâte sucrée est déposée en une voie ou plusieurs voies sur une bande transporteuse (9) souple amenée, compte tenu d'un changement de direction multiple, à travers un espace de cuisson (3) chauffé et est prélevée de celle-ci à un côté sortie.

2. Procédé selon la revendication 1, **caractérisé en ce que** la pâte est déposée sur une bande en matière plastique (9) mince, sans fin, extrêmement souple, alimentaire, thermorésistante et anti-adhésive.

3. Procédé selon la revendication 1 ou 2, **caractérisé en ce que** les bandes de pâtes (12) cuites sont ensuite enroulées sur des mandrins d'enroulement (14).

4. Procédé selon au moins l'une des revendications précédentes 1 à 3, **caractérisé en ce que** le rouleau de bande de pâte enroulé sur le mandrin d'enroulement (14) est tronçonné en petits rouleaux de gaufre.

5. Procédé selon au moins l'une des revendications précédentes 1 à 4, **caractérisé en ce que** la bande transporteuse est amenée à travers l'espace de cuisson essentiellement verticalement ou horizontalement, en particulier compte tenu de renvois multiples.

6. Dispositif de cuisson de bandes de pâte (12) en particulier pour la fabrication de gaufres, comme par exemple de petits rouleaux de gaufre, présentant une bande transporteuse (9) souple, amenée compte tenu d'un changement de direction multiple, à travers un espace de cuisson (3) chauffé, la bande transporteuse (9) étant une bande de matière plastique ou revêtue de matière plastique et étant renvoyée sur des rouleaux pour bande.

7. Dispositif selon la revendication 6, **caractérisé en ce que** la bande transporteuse (9) est une bande sans fin, en particulier une bande extrêmement souple en matière plastique ou revêtue de matière plastique.

8. Dispositif selon la revendication 6 ou 7, **caractérisé en ce qu'**est prévu un dispositif à renvoi multiple de bande transporteuse présentant des rouleaux pour bandes (8 ; 10) supportés en porte-à-faux.

9. Dispositif selon la revendication 8, **caractérisé en ce que** les axes entre deux rouleaux pour bandes (8 ;10) disposés se succédant dans le sens de la marche de la bande transporteuse (9) sont agencés en formant un angle l'un par rapport à l'autre, de préférence un angle d'environ 90°.

10. Dispositif selon la revendication 8 ou 9, **caractérisé en ce que** le dispositif à renvoi multiple de bande transporteuse présente une pluralité de rouleaux pour bande (8 ; 10) supérieurs et inférieurs.

11. Dispositif selon au moins l'une des revendications précédentes 6 à 10, **caractérisé par** un carter (1 ; 2) divisé, ouvrable.

12. Dispositif selon au moins l'une des revendications précédentes 6 à 11, **caractérisé par** des dispositifs chauffants pour l'espace de cuisson (3) à l'intérieur du carter (1 ; 2).

13. Dispositif selon au moins l'une des revendications précédentes 6 à 11, **caractérisé par** des radiateurs à infra-rouge, de préférence en liaison avec et/ou le long de parois intérieures du carter (2).

14. Dispositif selon au moins l'une des revendications précédentes 11 à 13, **caractérisé en ce que** les parois intérieures du carter (2) forment au moins partiellement des surfaces à rayonnement thermique.

15. Dispositif selon au moins l'une des revendications précédentes 12 à 14, **caractérisé en ce que** les parois intérieures du carter (2) sont partiellement chauffables et **en ce que** l'énergie thermique peut être transférée à la bande transporteuse (9) par convection et/ou radiation, une température, de la bande transporteuse (9) et/ou du dispositif chauffant de l'espace de cuisson (3) en particulier des parois intérieures du carter (2), étant réglable en continu ou sur des valeurs discrètes, en fonction d'une valeur de consigne de température donnée.

16. Dispositif selon la revendication 15, **caractérisé en ce que** le seuil de température se situe dans la plage de la température de cuisson de la bande de pâte (10), mais est toutefois inférieur à une température de service maximale admissible de la bande transporteuse (9).

17. Dispositif selon au moins l'une des revendications précédentes 12 à 16, **caractérisé en ce que** les parois intérieures de l'espace de cuisson (3) peuvent être chauffées au moyen d'électricité, de gaz, d'air chaud ou de fioul.

18. Dispositif selon au moins l'une des revendications précédentes 12 à 16 **caractérisé par** des plaques thermoconductrices (20), en liaison avec le dispositif de chauffage en particulier les parois intérieures du carter (2), qui font saillie entre les sections de la trajectoire de la bande transporteuse (9), en particulier pour diffuser des rayons thermiques en direction d'une face arrière de la bande transporteuse (9).

19. Dispositif selon au moins l'une des revendications précédentes 14 à 18, **caractérisé en ce que** des surfaces à rayonnement thermique sont disposées sensiblement parallèlement, entre des rouleaux pour bandes (8 ; 10) disposés à 90°, de sections renvoyées de la bande transporteuse.

20. Dispositif selon au moins l'une des revendications précédentes 6 à 19, **caractérisé par** une structure à double paroi du carter (1 ; 2) présentant un canal d'écoulement de fluide, en particulier un canal d'écoulement d'air (18) entre une paroi intérieurs (2) et une paroi extérieure (1) du carter (1 ; 2).

21. Dispositif selon au moins l'une des revendications précédentes 6 à 20, **caractérisé par** un dispositif de circulation d'air, en particulier une soufflante (21), pour homogénéiser un champ de température et/ou former une circulation forcée à l'intérieur de l'espace de cuisson (3), en particulier en liaison avec des tôles thermoconductrices (20) qui sont en liaison thermoconductrice avec des parois intérieures du carter.

22. Dispositif selon au moins l'une des revendications précédentes 6 à 21, **caractérisé en ce qu'**une direction de déplacement de la bande transporteuse (9) entre les rouleaux pour bande (8 ; 10) est sensiblement verticale ou horizontale.

23. Dispositif selon au moins l'une des revendications précédentes 6 à 22, **caractérisé en ce qu'**un dispositif de coupe est prévu en amont ou en aval du dispositif d'enroulement pour la bande de pâte cuite.

24. Dispositif selon au moins l'une des revendications précédentes 6 à 23, **caractérisé en ce qu'**au moins un mandrin d'enroulement du dispositif d'enroulement est supporté sur un axe pivotant pour différents angles d'enroulement de la bande de pâte cuite.

25. Dispositif selon au moins l'une des revendications précédentes 6 à 24, **caractérisé en ce que** sont prévus des radiateurs thermiques (22) orientés dans l'espace de cuisson (3), en particulier diamétralement opposés, qui sont réalisés en particulier en forme de radiateurs à infra-rouge (22, 23) chauffés au gaz ou électriquement.

26. Dispositif selon la revendication 25, **caractérisé en ce que** des radiateurs thermiques (22, 23) sont prévus de part et d'autre de la bande transporteuse (9), c'est-à-dire orientés, dans le sens de rayonnement, aussi bien sur une face avant que sur une face arrière de la bande transporteuse (9).

27. Dispositif selon au moins l'une des revendications précédentes 25 à 26, **caractérisé en *ce* que** les radiateurs thermiques (22) sont disposés, diamétralement opposés, essentiellement aux angles d'un rectangle ou d'un carré.

28. Dispositif selon au moins l'une des revendications précédentes 25 à 27, **caractérisé en ce que** des parois réfléchissantes (24) sont disposées entre les radiateurs thermiques (22).

29. Dispositif selon au moins l'une des revendications précédentes 25 à 28, **caractérisé en ce que** les faces arrière des radiateurs thermiques (22) sont protégées par des parois réfléchissantes (24a).

30. Dispositif selon au moins l'une des revendications précédentes 25 à 29, **caractérisé en ce que**, à distance des parois réfléchissantes (24) est prévue au moins une paroi d'impact (25), de préférence en agencement double, et qu'entre l'agencement de paroi d'impact (25) et une paroi réfléchissante est formé au moins un espace de circulation d'air.

31. Dispositif selon au moins l'une des revendications précédentes 25 à 30, **caractérisé en ce que**, à l'intérieur d'une zone formant coeur de l'espace de cuisson entourée par la bande transporteuse, sont disposés des radiateurs thermiques (23), en particulier des radiateurs à infra-rouge en agencement opposé aux radiateurs thermiques extérieurs (22).

32. Dispositif selon la revendication 31, **caractérisé en ce que** la puissance de chauffage des radiateurs (23 ; 22) intérieurs et/extérieurs, est différente et en particulier est réglable de manière variable et individuelle.

33. Dispositif selon au moins l'une des revendications précédentes 25 à 32, **caractérisé en ce qu'**une paroi d'impact (25) est reliée à une porte (4).

34. Dispositif selon au moins l'une des revendications précédentes 6 à 33, **caractérisé en ce qu'**un dispositif de déversement (13) pour le réglage d'une épaisseur de la matière déversée ou bande de pâte (12) est réglable sur plusieurs axes.

35. Dispositif selon au moins l'une des revendications précédentes 6 à 34, **caractérisé en ce qu'**avec la bande transporteuse, en particulier une bande de fibres de verre revêtue de Téflon, est prévu au moins un premier racleur de préférence présentant un matériau de contact dans la zone de raclage, qui correspond à celui de la surface de la bande transporteuse (12).

36. Dispositif selon la revendication 35, **caractérisé en ce qu'**un premier et un second racleurs sont prévus en appui sur la bande transporteuse.
